# EUROPÄISCHE PATENTANMELDUNG

(11) **EP 3 789 632 A1**
(43) Veröffentlichungstag der Anmeldung: **10.03.2021**
(21) Anmeldenummer: 20180840.9
(22) Anmeldetag: 18.06.2020
(51) Int. Cl.: F16G 1/10, F16G 1/28, F16G 5/08, F16G 5/20

(54) **TREIBRIEMEN**

(30) Priorität: 06.09.2019 DE 102019123948
(71) Anmelder: CLAAS Selbstfahrende Erntemaschinen GmbH, 33428 Harsewinkel (DE)
(72) Erfinder: Koch, Markus, 48369 Saerbeck (DE)
(74) Vertreter: CLAAS Gruppe

(57) **Zusammenfassung**

Die vorliegende Anmeldung betrifft einen in sich geschlossener Treibriemen (1) zur Kraftübertragung in einem Riemengetriebe (2), umfassend eine Riemenbasis (3) sowie mindestens einen sich ausgehend von der Riemenbasis (3) erstreckenden Riemenkeil (4), wobei der Treibriemen (1) ein flexibles Grundmaterial sowie eine Mehrzahl von in das Grundmaterial eingebetteten Verstärkungsfasern (5) umfasst, wobei die Verstärkungsfasern (5) zumindest im Wesentlichen parallel zu einer Mittelachse (6) des Treibriemens (1) ausgerichtet sind und sich jeweils - in Richtung der Mittelachse (6) betrachtet - nur entlang eine Teillänge des Treibriemens (1) erstrecken.

Um einen Treibriemen bereitzustellen, dessen Lebensdauer gegenüber bekannten Treibriemen verbessert ist, wird erfindungsgemäß vorgeschlagen, dass der Treibriemen (1) - in einem parallel zu der Mittelachse (6) sowie parallel zu einer Hochachse (7) des Treibriemens (1) geführten Längsschnitt betrachtet - mindestens einen Oberbereich (8) und einen unterhalb des Oberbereichs (8) angeordneten Unterbereich (10) aufweist, wobei eine Faserkonzentration von in dem Grundmaterial eingebetteten Verstärkungsfasern (5) in dem Oberbereich (8) größer ist als in dem Unterbereich (10).

## Beschreibung

Die vorliegende Anmeldung betrifft einen in sich geschlossenen Treibriemen gemäß dem Oberbegriff von Anspruch 1.

Der Treibriemen, der insbesondere zur Kraftübertragung in einem Riemengetriebe geeignet ist, umfasst eine Riemenbasis sowie mindestens einen sich ausgehend von der Riemenbasis erstreckenden Riemenkeil. Dabei ist es denkbar, dass der Treibriemen eine Mehrzahl von nebeneinander angeordneten, sich jeweils parallel zu einer Mittelachse des Treibriemens erstreckenden Riemenkeilen aufweist. Der Treibriemen ist von einem flexiblen Grundmaterial gebildet, in das eine Mehrzahl von Verstärkungsfasern eingebettet ist. Die Verstärkungsfasern sind zumindest - in einem Querschnitt des Treibriemens betrachtet - in einem Teil eines Querschnitts des Treibriemens vorhanden. Die Verstärkungsfasern sind dabei vorzugsweise ungeordnet in dem Grundmaterial orientiert, wobei eine Länge einer jeweiligen Verstärkungsfaser eine Gesamtlänge des Treibriemens deutlich unterschreitet. Insbesondere kann eine Länge einer jeweiligen Verstärkungsfaser weniger als 5 %, vorzugsweise weniger als 2 %, weiter vorzugsweise weniger als 1 % bezogen auf eine Gesamtlänge des Treibriemens betragen.

Treibriemen der eingangs beschriebenen Art sind im Stand der Technik weithin bekannt. Sie sind beispielsweise dazu geeignet, bei Verwendung in einem Riemengetriebe Kräfte ausgehend von einer Abtriebsscheibe auf eine Antriebsscheibe des Riemengetriebes zu übertragen. Dies ist beispielsweise bei Erntemaschinen üblich, bei denen ein mittels einer zentralen Verbrennungskraftmaschine bereitgestelltes Drehmoment mittels mindestens eines Riemengetriebes sowie eines davon umfassten Treibriemens zum Antrieb mindestens eines Arbeitsorgans verwendet wird.

Die bekannten Treibriemen haben sich insoweit als nachteilig herausgestellt, als sie einem vergleichsweise hohen Verschleiß unterliegen. Insbesondere kommt es regelmäßig zu einer Rissbildung im Bereich eines unteren Endes der Riemenbasis, von dem ausgehend sich ein jeweiliger Riemenkeil erstreckt. Dies tritt insbesondere dann auf, wenn auf den Treibriemen wirkende Zugkräfte mittels des Riemenkeils bzw. der Riemenkeile abgeführt werden.

Mithin ist es die Aufgabe der vorliegenden Erfindung, einen Treibriemen bereitzustellen, dessen Lebensdauer gegenüber bekannten Treibriemen verbessert ist.

Die zugrunde liegende Aufgabe wird erfindungsgemäß mittels eines Treibriemens mit den Merkmalen des Anspruchs 1 gelöst. Vorteilhafte Ausgestaltungen ergeben sich aus den Unteransprüchen 2 bis 12.

Der erfindungsgemäße Treibriemen ist dadurch gekennzeichnet, dass er - in einem parallel zu der Mittelachse sowie parallel zu einer Hochachse des Treibriemens geführten Längsschnitt betrachtet - mindestens einen Oberbereich und mindestens einen unterhalb des Oberbereichs angeordneten Unterbereich aufweist. Der Oberbereich und der Unterbereich unterscheiden sich erfindungsgemäß dadurch, dass eine Konzentration von in dem Grundmaterial eingebetteten Verstärkungsfasern ("Faserkonzentration") in dem Oberbereich größer ist als in dem Unterbereich. Insbesondere kann die Faserkonzentration in dem Oberbereich mindestens doppelt so groß sein wie in dem Unterbereich, wobei die Faserkonzentration in dem Unterbereich insbesondere null sein kann. Ferner ist es besonders zu bevorzugen, wenn der Oberbereich die Riemenbasis umfasst bzw. von der Riemenbasis gebildet ist, während der Unterbereich dem mindestens einen Riemenkeil zugeordnet ist.

Der erfindungsgemäße Treibriemen hat viele Vorteile. Ihm liegt die Überlegung zugrunde, die Rissbildung an der Unterseite der Riemenbasis, die im Stand der Technik zu beklagen ist, dadurch zu vermeiden, dass ein Abtrag von Kräften mittels des Riemenkeils als solchem möglichst vermieden wird. Mittels der Ausstattung des Oberbereichs mit einer höheren Faserkonzentration als des Unterbereichs wird diese gewünschte "Lenkung" des Kraftflusses über den Querschnitt des Treibriemens hinweg dadurch erreicht, dass der Oberbereich mittels Ausstattung mit einer vergleichsweise hohen Konzentration von Verstärkungsfasern versteift bzw. verfestigt wird, sodass der Oberbereich auf den Treibriemen wirkende Kräfte gewissermaßen "anzieht". Infolge der demgegenüber geringeren Faserkonzentration in dem Unterbereich des Treibriemens ist der Unterbereich zumindest gegenüber einer Zugkraftbelastung weicher als der Oberbereich, sodass er eine einwirkende Zugkraft zu einem geringeren Anteil übernimmt als der Oberbereich. Die geringere Einwirkung von Zugkräften auf den Unterbereich des Treibriemens vermeidet einen entsprechenden Kraftabtrag ausgehend von dem Unterbereich in den Oberbereich. Unterstellt, dass der Oberbereich von der Riemenbasis und der Unterbereich von dem Riemenkeil des Treibriemens gebildet ist, bedeutet dies, dass bei dem erfindungsgemäßen Treibriemen nur ein vergleichsweise geringer Krafteintrag an dem unteren Ende der Riemenbasis von dem Riemenkeil in die Riemenbasis abgetragen wird. Entsprechend wird die Neigung zur Rissbildung im Bereich des unteren Endes der Riemenbasis reduziert, wodurch sich die gewünschte Verbesserung der Lebensdauer des Treibriemens ergibt.

In einer vorteilhaften Ausgestaltung des erfindungsgemäßen Treibriemens umfasst selbiger zwischen dem Oberbereich und dem Unterbereich einen Mittelbereich, in dem die Faserkonzentration der Verstärkungsfasern kleiner als in dem Oberbereich jedoch größer als in dem Unterbereich ist. Bei dieser Ausgestaltung umfasst der Treibriemen mithin eine 3-stufige Unterteilung betreffend die Faserkonzentration, ausgehend von der höchsten Faserkonzentration im Oberbereich hin zu einer mittleren Faserkonzentration im Mittelbereich sowie einer niedrigsten Faserkonzentration im Unterbereich. Hierbei ist es nicht erforderlich, dass die Faserkonzentrationen der einzelnen Bereiche untereinander die gleichen Abstände aufweisen. Folglich ist es ohne Weiteres denkbar, dass die Faserkonzentration in dem Mittelbereich die Faserkonzentration in dem Unterbereich lediglich um 10 % übersteigt und gleichzeitig die Faserkonzentration in dem Oberbereich das Zehnfache der Faserkonzentration im Mittelbereich beträgt. Die Ausgestaltung des Treibriemens mit drei Bereichen erlaubt eine besonders genaue Lenkung des Kraftflusses über den Querschnitt des Treibriemens hinweg.

Sofern der Treibriemen mit den beschriebenen drei Bereichen ausgestattet ist, kann es besonders vorteilhaft sein, wenn sich der Zwischenbereich ausgehend von dem unteren Ende der Riemenbasis in eine von der Riemenbasis abgewandte Richtung erstreckt. Bei dieser Ausgestaltung erstreckt sich der Unterbereich mithin ausgehend von einem unteren Ende des Zwischenbereichs bis hin zu dem unteren Ende des Riemenkeils, das der Riemenbasis abgewandt ist. Folglich ist bei dieser Ausgestaltung die Riemenbasis insgesamt von dem Oberbereich gebildet. Die beschriebene Ausgestaltung hat den Vorteil, dass die Riemenbasis insgesamt mittels einer möglichst hohen Konzentration von Verstärkungsfasern verstärkt ausgebildet ist und lediglich der Bereich des mindestens einen Riemenkeils mittels einer gezielten Verringerung der Faserkonzentration dahingehend beeinflusst wird, dass er deutlich weniger Zugkräfte aufnimmt und mithin im Betrieb des Treibriemens eine geringere Zugspannung aufweist.

Weiterhin kann es besonders Vorteil sein, wenn eine parallel zu der Hochachse des Treibriemens gemessene Höhe des Unterbereichs größer ist als die gleichermaßen parallel zu der Hochachse des Treibriemens gemessene Höhe des Mittelbereichs. Bei dieser Ausgestaltung bildet der Mittelbereich folglich lediglich einen schmalen Übergang zwischen dem Unterbereich und dem Oberbereich. Dies kann insoweit vorteilhaft sein, als ein möglichst kontinuierlicher Kraftanstieg ausgehend von dem Unterbereich hin zu dem Oberbereich geschaffen wird, indem der Mittelbereich mittels Beimischung einer größeren Menge an Verstärkungsfasern gegenüber dem Unterbereich dazu befähigt wird, einen gewissen Anteil der insgesamt auf den Treibriemen einwirkenden Zugkraft aufzunehmen.

Vorteilhafterweise beträgt die Faserkonzentration der Verstärkungsfasern in dem Unterbereich höchstens 20 %, vorzugsweise höchstens 15 %, weiter vorzugsweise höchstens 10 %, der Faserkonzentration in dem Oberbereich. Der Unterbereich kann insbesondere gar keine Verstärkungsfasern beinhalten und vorteilhafterweise ausschließlich von dem Grundmaterial gebildet sein.

Sofern ein Mittelbereich vorhanden ist, kann es weiterhin vorteilhaft sein, wenn die Faserkonzentration in dem Mittelbereich höchstens 50 %, vorzugsweise höchstens 40 %, weiter vorzugsweise höchstens 30 %, der Faserkonzentration in dem Oberbereich beträgt.

Das Grundmaterial ist in einer vorteilhaften Ausgestaltung des erfindungsgemäßen Treibriemens von einem Synthesekautschuk gebildet. Dieser kann insbesondere von Ethylen-Propylen-Dien-Kautschuk gebildet sein. Zusätzlich, jedoch auch unabhängig davon, kann es besonders vorteilhaft sein, wenn zumindest ein Teil der Verstärkungsfasern, vorzugsweise sämtliche Verstärkungsfasern, von Aramid und/oder Polyester gebildet sind.

Schließlich ist eine solche Ausgestaltung des erfindungsgemäßen Treibriemens besonders vorteilhaft, bei der der Treibriemen mindestens einen Zugstrang umfasst, der sich parallel zu der Mittelachse des Treibriemens erstreckt. Der Zugstrang erstreckt sich dabei insbesondere über eine Gesamtlänge des Treibriemens und ist in sich geschlossen ausgeführt. Vorteilhafterweise ist der mindestens einen Zugstrang in der Riemenbasis angeordnet, idealerweise in einem von dem mindestens einen Riemenkeil abgewandten Endbereich der Riemenbasis. Hierbei ist es besonders gut vorstellbar, dass der Treibriemen über eine Mehrzahl von parallel zueinander verlaufenden Zugsträngen verfügt. Diese können beispielsweise von metallischen Seelen oder von Kunststoff gebildet sein.

In einer bevorzugten Ausgestaltung des erfindungsgemäßen Treibriemens ist der mindestens eine Riemenkeil von einem anderen Grundmaterial gebildet als die Riemenbasis. Insbesondere kann der Riemenkeil von einem "verschleißfreudigen" Grundmaterial gebildet sein, dessen Steifigkeit gegenüber dem Grundmaterial der Riemenbasis reduziert ist. Ein auf diese Weise ausgebildeter Treibriemen führt materialbedingt automatisch zu einer weitergehenden Konzentration von auf den Treibriemen wirkender Kräfte auf den Bereich der Riemenbasis und mithin insbesondere auf den mit einer hohen Faserkonzentration versehenen Oberbereich.

Die Erfindung ist nachstehend anhand eines Ausführungsbeispiels, das in den Figuren dargestellt ist, näher erläutert. Es zeigt:
- Fig. 1:: Einen schematischen Querschnitt durch eine Erntemaschine, die mit einem erfindungsgemäßen Treibriemen ausgestattet ist,
- Fig. 2:: Einen schematischen Querschnitt durch einen erfindungsgemäßen Treibriemen,
- Fig. 3:: Einen schematischen Längsschnitt durch den Treibriemen gemäß Figur 2.

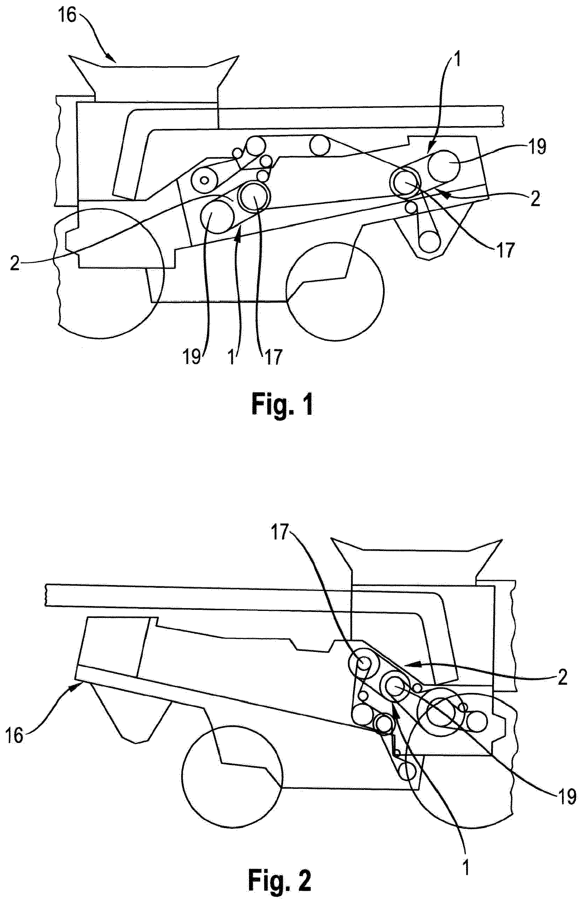

Ein Ausführungsbeispiel, das in den **Figuren 1 bis 3** veranschaulicht ist, beschreibt einen erfindungsgemäßen Treibriemen **1,** der eine Riemenbasis **3** sowie eine Mehrzahl von sich an die Riemenbasis **3** anschließenden Riemenkeilen **4** aufweist. Ein solcher Treibriemen **1** kann insbesondere zur Kraftübertragung in einem Riemengetriebe **2** einer Erntemaschine **16** zum Einsatz kommen, die schematisch in **Figur 1** dargestellt ist. Dort wird ein derartiger Treibriemen **1** zu verwendet, ein mittels einer nicht dargestellten Verbrennungskraftmaschine erzeugtes Drehmoment ausgehend von einer Abtriebsscheibe **17,** die auf einer Abtriebswelle der Verbrennungskraftmaschine angeordnet ist, auf mindestens eine Antriebsscheibe **19** zu übertragen, die mit einer entsprechenden Antriebswelle eines nicht dargestellten Arbeitsorgans der Erntemaschine **16** zusammenwirkt. Der Treibriemen **1** ist dabei in sich geschlossen ausgeführt und weist eine Gesamtlänge auf, wobei der Treibriemen **1** unter anderem mittels einer Mehrzahl von Umlenkrollen **18** umgelenkt wird.

Der Treibriemen **1** ist in dem gezeigten Beispiel derart ausgebildet, dass er - in einem senkrecht zu seiner Mittelachse **6** geführten Querschnitt betrachtet - einen Oberbereich **8,** einen Mittelbereich **9** sowie einen Unterbereich **10** umfasst. Der Oberbereich **8** korrespondiert in dem gezeigten Beispiel mit der Riemenbasis **3,** von der ausgehend sich die Riemenkeile **4** erstrecken. Mithin weisen die Riemenkeile **4** an einem unteren Ende **12** der Riemenbasis **3** eine maximale Breite auf, die sodann in eine der Riemenbasis **3** abgewandte Richtung sukzessive bis zu einem unteren Ende **11** des jeweiligen Riemenkeils **4** auf eine minimale Breite absinkt. Die einzelnen Riemenkeile **4** sind parallel zueinander sowie parallel zu der Mittelachse **6** des Treibriemens **1** angeordnet. Die Riemenkeile **4** sind jeweils in zwei verschiedene Bereiche unterteilt, wobei ein der Riemenbasis **3** zugewandte Bereich von dem Mittelbereich **9** und der der Riemenbasis **3** abgewandte Bereich von dem Unterbereich **10** gebildet sind.

Die drei Bereiche des Treibriemens **1,** das heißt der Oberbereich **8,** der Mittelbereich **9** und der Unterbereich **10,** sind jeweils übereinander an dem Treibriemen **1** ausgebildet, sodass der Unterbereich **10** keinen unmittelbaren Kontakt mit dem Oberbereich **8** aufweist. In Richtung einer Hochachse **7** des Treibriemens **1** gemessen, weist der Mittelbereich **9** eine geringere Höhe **14** auf als der Unterbereich **13.** Eine Höhe **20** des Oberbereichs **8** entspricht einer Höhe der Riemenbasis **3,** die ihrerseits die Höhe **13** des Unterbereichs **10** übersteigt.

Die Bereiche des Treibriemens **1** unterscheiden sich dadurch, dass sie unterschiedliche Konzentrationen von Verstärkungsfasern **5** aufweisen. Diese Verstärkungsfasern **5,** die in dem gezeigten Beispiel von Aramid gebildet sind, weisen jeweils eine Länge auf, die die Gesamtlänge des Treibriemens **1** deutlich unterschreitet. Insbesondere kann die Gesamtlänge des Treibriemens **1** ca. 20 m betragen, während eine durchschnittliche Länge der Verstärkungsfasern **5,** deren Längen grundsätzlich variieren können, beispielsweise im Bereich weniger Zentimeter liegt. Die Verstärkungsfasern **5** sind ungeordnet in dem Grundmaterial orientiert, sodass sie eine Versteifung des Treibriemens **1** zumindest im Wesentlichen richtungsunabhängig bewirken. Die Verstärkungsfasern **5** sind in ein Grundmaterial des Treibriemens **1** eingebettet, wobei das Grundmaterial in dem gezeigten Beispiel von einem Synthesekautschuk gebildet ist. Erfindungsgemäß ist die Konzentration der Verstärkungsfasern **5** in dem Oberbereich **8** des Treibriemens **1** maximal. In dem Mittelbereich **9** ist die Konzentration der Verstärkungsfasern **5** demgegenüber deutlich reduziert, wobei die Faserkonzentration in dem gezeigten Beispiel in dem Mittelbereich **9** ca. 30 % der Faserkonzentration in dem Oberbereich **8** beträgt. In dem Unterbereich **10** ist die Faserkonzentration wiederum geringer als in dem Mittelbereich **9,** wobei die Faserkonzentration in dem Unterbereich in dem gezeigten Beispiel null ist. Mit anderen Worten ist der Treibriemen **1** in seinem Unterbereich **10** frei von Verstärkungsfasern **5.** Die sich durch diese Untergliederung des Querschnitts des Treibriemens **5** ergebenden Vorteile sind vorstehend bereits dargelegt.

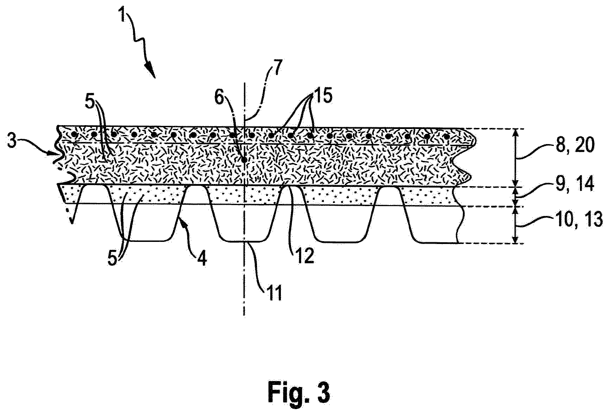

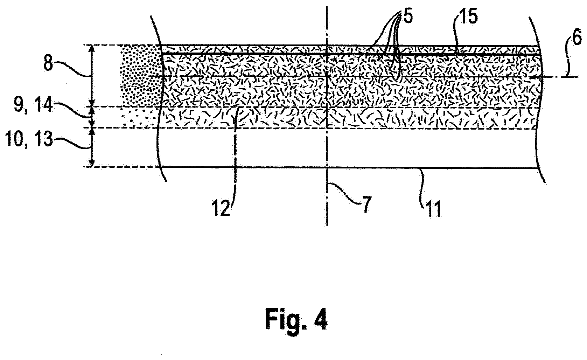

Zusätzlich zu den vergleichsweise kurzen Verstärkungsfasern **5** verfügt der Treibriemen **1** über eine Mehrzahl von Zugsträngen **15,** die sich besonders gut anhand von **Figur 3** ergeben. Die Zugstränge **15** sind in sich geschlossen ausgebildet und erstrecken sich mithin über die volle Gesamtlänge des Treibriemens **1.** Sie sind parallel zu der Mittelachse **6** des Treibriemens **1** orientiert. Typischerweise ist ein Durchmesser eines Zugstrangs **15** deutlich größer als ein Durchmesser einer Verstärkungsfaser **5.**

### Bezugszeichenliste

- 1: Treibriemen
- 2: Riemengetriebe
- 3: Riemenbasis
- 4: Riemenkeil
- 5: Verstärkungsfaser
- 6: Mittelachse
- 7: Hochachse
- 8: Oberbereich
- 9: Mittelbereich
- 10: Unterbereich
- 11: Ende
- 12: Ende
- 13: Höhe
- 14: Höhe
- 15: Zugstrang
- 16: Erntemaschine
- 17: Abtriebsscheibe
- 18: Umlenkrolle
- 19: Abtriebsscheibe
- 20: Höhe

## Patentansprüche

1. In sich geschlossener Treibriemen (1) zur Kraftübertragung in einem Riemengetriebe (2), umfassend
- eine Riemenbasis (3) sowie
- mindestens einen sich ausgehend von der Riemenbasis (3) erstreckenden Riemenkeil (4),
wobei der Treibriemen (1) ein flexibles Grundmaterial sowie eine Mehrzahl von in das Grundmaterial eingebetteten Verstärkungsfasern (5) umfasst,
wobei die Verstärkungsfasern (5) ungeordnet in dem Grundmaterial ausgerichtet sind,
wobei Längen der Verstärkungsfasern (5) eine Gesamtlänge des Treibriemens (1) deutlich unterschreiten,
**dadurch gekennzeichnet, dass**
der Treibriemen (1) - in einem parallel zu der Mittelachse (6) sowie parallel zu einer Hochachse (7) des Treibriemens (1) geführten Längsschnitt betrachtet - mindestens einen Oberbereich (8) und einen unterhalb des Oberbereichs (8) angeordneten Unterbereich (10) aufweist,
wobei eine Faserkonzentration von in dem Grundmaterial eingebetteten Verstärkungsfasern (5) in dem Oberbereich (8) größer ist als in dem Unterbereich (10).

2. Treibriemen (1) nach Anspruch 1, **dadurch gekennzeichnet, dass** der Oberbereich (8) von der Riemenbasis (3) gebildet ist.

3. Treibriemen (1) nach einem der vorhergehenden Ansprüche, **dadurch gekennzeichnet, dass** der Unterbereich (9) sich ausgehend von einem der Riemenbasis (3) abgewandten unteren Ende (11) des Riemenkeils (4) in Richtung der Riemenbasis (3) erstreckt.

4. Treibriemen (1) nach einem der vorhergehenden Ansprüche, **gekennzeichnet durch** einen zwischen dem Oberbereich (8) und dem Unterbereich (10) angeordneten Mittelbereich (9), wobei die Faserkonzentration in dem Mittelbereich (9) kleiner als in dem Oberbereich (8) sowie größer als in dem Unterbereich (10) ist.

5. Treibriemen (1) nach Anspruch 4, **dadurch gekennzeichnet, dass** sich der Zwischenbereich (9) ausgehend von einem der Riemenbasis (3) zugewandten Ende (12) des Riemenkeils (4) in eine von der Riemenbasis (3) abgewandte Richtung erstreckt.

6. Treibriemen (1) nach Anspruch 4 oder 5, **dadurch gekennzeichnet, dass** eine parallel zu der Hochachse (7) des Treibriemens (1) gemessene Höhe (13) des Unterbereichs (10) größer ist als eine Höhe (14) des Mittelbereichs (9).

7. Treibriemen (1) nach einem der Ansprüche 4 bis 6, **dadurch gekennzeichnet, dass** die Faserkonzentration der Verstärkungsfasern (5) in dem Mittelbereich (9) höchstens 50 %, vorzugsweise höchstens 40 %, weiter vorzugsweise höchstens 30 %, der Faserkonzentration in dem Oberbereich (8) beträgt.

8. Treibriemen (1) nach einem der vorhergehenden Ansprüche, **dadurch gekennzeichnet, dass** der Unterbereich (10) frei von Verstärkungsfasern (5) ausgebildet ist.

9. Treibriemen (1) nach einem der vorhergehenden Ansprüche, **dadurch gekennzeichnet, dass** zumindest ein Teil der Verstärkungsfasern (5), vorzugsweise sämtliche Verstärkungsfasern (5), von Aramid und/oder Polyester gebildet sind.

10. Treibriemen (1) nach einem der vorhergehenden Ansprüche, **dadurch gekennzeichnet, dass** das Grundmaterial von einem Synthesekautschuk, insbesondere von Ethylen-Propylen-Dien-Kautschuk, gebildet ist.

11. Treibriemen (1) nach einem der vorhergehenden Ansprüche, **gekennzeichnet durch** mindestens einen Zugstrang (15), der sich parallel zu der Mittelachse (6) des Treibriemens (1) über eine Gesamtlänge des Treibriemens (1) erstreckt, wobei vorzugsweise der Zugstrang (15) im Bereich der Riemenbasis (3) angeordnet ist.
